# EUROPEAN PATENT SPECIFICATION

(11) **EP 1 864 779 B1**
(45) Date of publication and mention of the grant of the patent: **08.12.2010**
(21) Application number: 06290958.5
(22) Date of filing: 09.06.2006
(51) Int. Cl.: B29C 45/00, B29D 35/12, A43B 19/00

(54) **A cushioning pad for a human foot, an insole and a shoe comprising said pad, and a method for the manufacture of said insole**
Polsterkissen für den menschlichen Fuss, Innensohle und Schuhwerk mit einem solchen Pad, und Verfahren zur Herstellung einer solcher Sohle
Coussin amortisseur pour le pied d'un humain, semelle et chaussure équipées d'un tel coussin, et méthode de fabrication d'une telle semelle

(43) Date of publication of application: 12.12.2007
(73) Proprietor: Johnson and Johnson GmbH, 40474 Düsseldorf (DE)
(72) Inventor: Roberts, Andrew, Woodley, Berkshire, RG5 4RS (GB); Perez, Encama, 40211 Düsseldorf (DE)
(74) Representative: Metten, Karl-Heinz

(56) References cited:
- WO-A1-00/10414
- US-A- 2 567 028
- US-A- 3 316 663
- US-A- 5 860 229
- US-A1- 2005 039 349

## Description

The present invention relates to a cushioning pad for the support of the ball regions of a human foot adapted to be placed in a shoe beneath the foot of a wearer of the shoe. The present invention further relates to insoles and shoes comprising the pads of the present invention.

Insoles for shoes are frequently used to improve the comfort or for adapting the shoe more closely to the anatomy of the foot of the wearer. Well designed insoles shall be suited to distribute the impact more evenly while walking or running so that no longer only specific areas of the foot have to experience stress. Such insoles not only have a cushioning effect but also take care of directing the foot into an optimized configuration during each step. However, insoles, in particular insoles accommodated to the anatomy of the foot of the wearer can not be obtained in a straightforward manner but have to be manufactured individually. Also, insoles due to their size most often only fit into a specific shoe of the wearer and can not be used with other shoes.

According to German utility model DE 85 12 490 U1 an insole having superior cushioning properties and providing high comfort has to comprise a lower flexible layer of a foamed material having a pressure resistance of at least 0.03 N/mm² at a distortion of 40 %, a flexible medium layer made of a foamed material having a pressure resistance at a distortion of 40% which is smaller than that of the lower layer, and a top layer made from a textile fabric. Whereas the lower layer can be made from an open-cell styrene-butadiene latex having a density of 0.24 g/cm³, the medium layer is made from an open cell styrene-butadiene latex having a density of 0.19 g/cm³.

Given that those regions of the foot which are most subjected to shocks and impulsive stresses are the heels and the ball regions, effort has been spent to uniformly distribute stress over the entire foot by specifically designed insoles. For example, in WO 2005/089580 A1 a composite footwear insole is described having a front portion for interacting with the users foot at the metatarsal region and a rear portion for interacting with the foot over the heel region, wherein at least the rear portion has at least one layer of gel material whose plane size is at least substantially equal to that of the rear portion. In one embodiment the front and the rear portion of the insole can be provided with gel inserts. These gel inserts are embedded into the insole so that a substantially continuous upper surface free of discontinuities is obtained.

EP 1 166 671 B1 is about an insole which in addition to a gel cushion for a heel region makes use of a stabilizing element for said heel region. This insole also provides for a recess in the heel region in which the gel cushion can be inserted in a form-fitting manner. Further gel cushions can be inserted also in the region of the big toe and in the ball region.

Insoles, however, are not suited to be worn with any type of shoes such as high heels or other shoes which have a rather narrow width. In these cases pads, e.g. for the heel region or the region of the balls are frequently preferred over insoles.

In DE 101 17 981 A1 a multilayer gel pad is disclosed for use in high heels which has to comprise two or three layers of different stiffness. The stiffness of the layers is increasing from top to bottom. Whereas in the region of the balls the thickness of the pad has to be around 1 cm it is around 2 to 3 mm in the region of the toes. The surface of the pad according to DE 101 17 981 A1 has to be provided with a so-called "4-way-stretch" covering.

EP 327 930 B1 is about a metatarsal pad for a human foot for reducing trauma to the heads of the metatarsal. This pad has to be convexly curved in the mid-portion of the frontal edge, and concavely curved in at least one lateral portion of said frontal edge. EP 327 930 B1 requires the pad to be made of a substantially incompressible material and to be placed in a shoe just posteriorly of the position of the heads of the metatarsal bones, i.e. posteriorly of the ball region. In this manner stress can be evenly distributed over a much greater area whereby the bearing weight on the heads of the metatarsal is effectively reduced. However, only a rather limited range of shoe designs allow such an insert to be placed posteriorly of the position of the heads of the metatarsal bones.

In US 2005/0039349 A1 a pad for the ball region of a foot is disclosed which comprises a substantially planar member including a lower surface and an upper surface, and a raised area at a protruded location corresponding to a ball of the foot when the pad is placed into a footwear for separating bones of second and third metatarsals of the foot. This pad can be made of rubber material. With these pads the problem of pain caused by the bone structures of the second and third metatarsals coming together shall be remedied.

US 3,316,663 is about an anti-slip insert for footwear which comprises a longitudinally arcuate and upwardly concave pad formed anatomically to properly underly the ball of the foot, a ridge formed in said pad to abut the metatarsal heads and restrain the foot from sliding forward in the footwear, a foot relieving device disposed along the length of said footwear behind said pad, and top and bottom covers on said pad. Each of said covers extent beyond the pad to form a rearwardly opening pocket therebetween to receive the end of said foot relieving device. With these inserts an elevation shall be provided which may engage the foot in front of the metatarsal heads and which restrains forward motion of the foot.

In WO 00/10414 A1 a foot pad is described which comprises a planar lower surface dimensioned and configured to interface with the insole of a shoe, and an upper surface having a multiplicity of upward extending protrusions each separated by an air-passage channel which includes a quantity of trapped air.

US 5,860,229 is relating to an inlay sole comprising a soft-elastic lower layer, a flexible cover layer distinct from said lower layer, and separable knobs. Said separable knobs are fixed captively and held separably in the lower layer and arranged in groups with small intermediate distances in areas of the inlay sole selected according to the aspects of reflex zone massage. The separable knobs in the inlay zone have an enlarged foot. Said enlarged foot of each said separable knob fits into a corresponding recess in the lower layer. Said separable knob extends through a hole in said flexible cover layer and has an enlarged head with rounded upper side. The enlarged head has a diameter which is slightly larger than the diameter of the hole, and said enlarged head has a lower edge and is supporting itself with its slower edge in the flexible cover layer.

Against the above it would be desirable to be provided with a pad which does not exhibit the disadvantages of the pad and insole systems of the prior art as.

It has therefore been an object of the present invention to provide a pad and an insole which guarantee a sufficient cushioning for the ball region of a foot also upon long and repeated use and which are suited for nearly every type of shoe.

It has been a further object of the present invention to provide a pad and an insole which stay in place in the shoe during use and which are discrete to wear.

It has been a further object of the present invention to provide a cushioning pad and an insole which exhibit high comfort and high protection when worn, in particular in high heeled shoes, in order to support the ball regions, and which in addition prevents the foot to slip through.

The problem underlying the present invention has been solved by a pad for the ball regions of a human foot according to the features of claim 1.

It has been found that when the ball regions of a foot are experiencing a rather soft cushioning pad made of an elastomeric material and when the pad provides for a zone tapered in the Z dimension in the area following the zone which supports the ball region in the toe to heel direction, a very relaxing and also stabilizing effect is observed with the foot when the pad is placed in the shoe of a wearer. This is in particular the case for high heeled shoes. The same effect occurs if a first zone which provides support for the ball region is provided with a multitude of protruding elements. In addition to enhancing the cushioning effect this pattern of protruding elements provides a massage to the ball regions while the wearer is walking or standing and also helps to stabilize the position of the foot in the shoe. Preferably, protruding elements are provided only on the front side surface of the first zone of such a pad according to the present invention, leaving the second zone which is tapered in the Z dimension in the toe to heel direction with a flat front side surface. The dimension of a protruding element from its base to the top is preferably in the range of from 0.5 mm to 3 mm, in particular from 0.75 mm to 2.5 mm, and most preferred from 1.0 mm to 2.0 mm.

The pad for the ball regions of the foot is preferably placed in a shoe in such a manner that the first zone is supporting at least part of the ball region, preferably essentially the entire ball region, and that the second zone is arranged adjacent to the ball regions in the direction of the heel. It is possible to provide a separate first region for every single ball region related to a specific toe. Also, a first zone can be provided for two or three or four adjacent ball regions. Preferably, the pad for the ball region according to the invention is provided with a first zone which provides support for the ball region relating to every toe. It is also preferred that the second zone is directly adjacent to the first zone thereby not being interrupted by another zone having a substantial dimension in a toe to heel direction. Consequently, the second zone usually does not directly provide further direct support for the ball regions relating to the toes.

The aforementioned pads according to the invention can be used with any type of shoe such as walking shoes, running shoes, climbing shoes or climbing boots. The pads according to the invention can be effectively used in high heeled shoes. These pads will only alleviate the wearing comfort but also reliably reduce the risk of slipping through.

In another embodiment which is according to the invention with the pad for the lower regions it is possible that the tapering of the pad in the toe to heel direction is no longer just limited to the second zone but already stops in the rear portion of the first zone, that is that portion of the first zone which is further apart from the toes in the heel to toe direction when placed in a shoe than the front part of the first zone. This tapering after first zone in the direction of the second zone in this embodiment preferably in the back half of the first zone, more preferably in the last third part of the first zone. This tapering of the rear portion of the first zone of the pad for the borer regions can be over the entire width of the first zone or only over part of the width of the first zone. The aforementioned described tapered sections of the first zones most preferably exhibit a pattern of protruding elements as described herein.

In another embodiment which is also according to the invention it has been found that though it is preferred that the second zone is attached to the first zone over the entire width of the first zone it is also possible that the second zone has a smaller width at its junction to the first zone and the width of the first zone so that the first zone at least partially terminates without being bonded to the second zone. In other words with this embodiment a section of the second zone is cutout. Preferably, with this embodiment the remainder of their second zone is joined to that part of the first zone which is forming the outside portion of the first zone. With this embodiment the second zone is particularly useful as a handling aid when placing the pad according to the dimension in the shoe while removing it therefrom.

In a preferred embodiment the pattern of protruding elements comprises a multitude of adjacent ridges, that is at least two adjacent ridges, preferably at least three adjacent ridges. Of course, any other pattern of protruding elements can be chosen as long as a massaging and stabilizing effect is accomplished. The pattern of protruding elements can be regular or irregular in shape and can comprise geometric forms such as cuboids, hemispheres or pyramids. Preferably the protruding elements are at least partly orientated essentially parallel and/or at least partly orientated essentially tilted with respect to the Y dimension.

The present invention preferably provides for at least two adjacent ridges having a wave-like form in the X-Y plane, in particular oriented from inside to outside along the Y axis. The X-Y plane is said plane which is formed by the pad when lying on a flat horizontal surface, that is this flat surface is essentially parallel to the X-Y plane. It is particularly preferred, if essentially all ridges are oriented uniformly, in particular essentially in parallel.

In general, if the ridges exhibit a wave-like pattern their size can be chosen within rather large limits. For example, a wave pattern crossing the pad in, for example, the Y dimension from the outside to inside direction can have just two wave peaks and one intermediate wave trough, or can have two wave troughs and one intermediate wave peak. Such a wave pattern can also comprise up to 10 wave peaks with intermediate wave troughs or vice versa. Most preferably, at least one wave-like ridge, in particular two adjacent wave-like ridges, exhibit three adjacent wave troughs.

In general, the pad of the invention is composed of the first and second zone. In one embodiment a pad according to the invention can essentially consist of only one first and only one second zone. In another embodiment the pad according to the invention can further comprise a, in particular circumferential, rim portion. This rim portion can also be provided with the characteristic surface features of the adjacent first or second zone or can be provided with a specific surface pattern on its own. It has been found to be advantageous to adapt the thickness of the rim, that is its extension in the Z dimension, so that it essentially corresponds to the thickness of the adjacent portion of the first or second zone at least where the rim portion meets the first or second zone. Preferably the rim is tapered towards its circumferential edge, for example in a rounded manner or by use of a straight slope.

The second zone which is tapered preferably has essentially the same thickness as the first zone at those areas where it is joined to said first zone. The borderline between the first and second zone can in one embodiment of the present invention comprise a slightly protruding rim or wall or can even not be perceivable in a haptic manner apart from the beginning tapering effect.

The invention further provides for a pad embodiment wherein the back side surface of the first zone and/or the back side surface of the second zone are essentially flat. Preferably both the back side surface of the first zone and the back side surface of the second zone, and more particularly the backside surface of the entire pad is created rather flat. In other words, the backside surface does not have substantial protrusions which might hamper its flat placement on a plane surface. However, in an alternative embodiment which is according to the invention the back side surface of the first zone is provided with a pattern of protruding elements, in particular as described above. This arrangement is in particular preferred if also the front side surface of the first zone is provided with a pattern of such protruding elements, preferably in the form of wave-like ridges.

While the second zone is tapered, as described above, the first zone preferably does not exhibit a pronounced tapering effect in a specific direction. Preferably the first zone exhibits a uniform average thickness. For example, when placed on a flat surface those portions of the front side surface of the first zone which are furthest apart from the supporting surface should essentially have the same distance from said surface. The second zone being tapered in toe to heel direction for the ball region pad and from heel to toe direction for the heel pad according to the invention preferably has a thickness at its thickest portion which is essentially identical to the thickness of the first zone, in particular at that part of the pad where the second zone meets the first zone. The average thickness of the first zone preferably is in the range of 1 to 4 mm, in particular form 1.5 to 3 mm.

The present invention further provides for a pad wherein the outside portion of the first zone is extending more to the heel direction in the X dimension than the inside portion of the first zone and/or wherein the inside portion of the second zone is extending more to the toe direction in the X dimension than the outside portion of the second zone. Interestingly, for the pad adapted to be used for the ball regions it has been found when it is the outside portion of the first zone which extends more in the toe to heel direction than the inside portion a more comfortable wear and also a much enhanced stabilizing effect is observed. That is, it is the ball region of the little toe for which a larger support area of the first zone is provided although this ball region is the smallest one. The outside portion or section of the aforementioned pad and also of the first zone can be defined as that region of the pad or the first zone which is lying towards and/or at the outside part of the pad. Outside means that when the pad is placed in a shoe the outside portion of the first zone or pad is directing or adjacent to the outside part of the shoe. The same applies in reverse to the inside portion of the first zone. The outside portion can for example cover on the outside to inside direction (in Y dimension) that area obtained by dividing the pad by a longitudinal middle axis in the toe to heel direction (in X dimension). The outside portion can extend in the toe to heel direction in any geometric form, for example in a stepwise or continuously bent manner, the latter being preferred. For example, the outside portion of the pad for the ball region can extend into the toe to heel direction with a length which is in the range from, for example, 5 to 50% of the length of the inside portion of the first zone in the toe to heel direction (X dimension), preferably in the range from 10 to 30%.

Furthermore, it has been found to be advantageous if the pads of the present invention, in particular the pad for the ball regions, are provided with at least one ridge which has a first sidewall which is directing towards the toe of the foot of a wearer and a second sidewall adjacent the peak of the ridge which is directing towards the heel of the foot of a wearer wherein the average slope of the first sidewall is smaller than the average slope of the second sidewall of the ridge. With this pad embodiment a particularly enhanced massaging effect has been observed. The maximum length of the first sidewall can, for example, be in the range from 0.3 to 15 mm, in particular in the range from 2 to 10 mm. The preferred length of the second sidewall is in the range from 0.5 to 4 mm, in particular from 0.5 to 2 mm. In one embodiment the second sidewall has an essentially vertical orientation when the pad is placed on a flat horizontal plane.

Usually, the wave-like pattern of adjacent ridges can be imposed on the front side surface of the first zone in an arbitrary manner. It has been found to be preferable to have the wave-like ridges oriented from the inside to the outside along the Y dimension. It is also possible to rotate this wave-like pattern of the ridges in the X-Y plane, for example, of about 90° or 180° of about or in any other angle. By turning this wave-like pattern for 180° the first sidewalls in the above described preferred embodiment are facing towards the heel and the second sidewalls of the ridges are facing towards the toe.

The first and second zone and in particular the entire pad, for example also including the rim, are preferably made in one piece. This can, for example, be accomplished by way of injection molding. Whereas the first and second zones are made of an elastomeric material the rim can be composed of either a thermoplastic or an elastomeric material. It is preferred that the rim is also made of an elastomeric material. Preferred elastomeric materials which can be used for the first and second zone as well as for the rim are natural or synthetic rubber or a thermoplastic elastomer (TPE).

Suitable synthetic elastomeric polymeric materials comprise for example polymers made from conjugated dienes, for example, isoprene, butadiene, or chlorobutadiene, as well as from copolymeric materials made from conjugated dienes and vinyl derivatives such as styrene and acrylonitrile. Exemplarily, suitable synthetic rubber materials comprise isoprene rubber, butadiene rubber, chloroprene rubber, styrene butadiene rubber (SBR), nitrilo-butadiene rubber (NBR), also in hydrogenated form, ethylene-propylene-(diene) rubber (EPM, EPBM), ethylene vinyl acetate rubber, silicone rubber also including liquid silicone rubber.

Suitable liquid silicones are usually based on polyorganosiloxanes. These polymers are provided with siloxane chains (-Si-O-Si-O) in which the free valances of the Si atoms are saturated by use of hydrogen or an organic group such as methyl, phenyl, vinyl, or by use of hydroxyl groups. In general, liquid silicones can comprise around 1.000 repeating units. In contrast, solid silicone rubbers comprise around 6.000 to 10.000 repeating units. The vulcanization reaction usually takes place between a silane group (Si-H) and a vinyl group by way of a transition metal catalyzed hydrosilylation. Liquid silicones usually are based on a two-component mixture comprising vinylpolysiloxanes having a low viscosity on the one hand, and hydrogen functionalized polysiloxanes or silanes on the other hand. Suitable catalysts are based on noble metals, in particular platinum. In general, the amount of catalyst needed is in the ppm range. By way of addition reaction which usually does not furnish any side products vinyl functionalized polysiloxanes are bonded to hydrogen functionalized siloxanes. Preferably, in the two-component system it is the vinyl functionalized polysiloxane which already comprises the catalyst. Particularly suitable hydrogen functionalized siloxanes or silanes comprise methyl hydrogen siloxane, preferably comprising at least three SiH groups in one molecule. Suitable liquid silicones or their respective two-component systems are well known to the person skilled in the art, and can, for example be purchased from GE Bayer Silicones under the trade name Siloprene^{®} LSR or from the company Wacker Chemie under the tradename Elastosil^{®} LR.

The vulcanization velocity can be controlled via the catalyst concentration and/or by adding an inhibitor. Suitable inhibitors comprise higher alcohols such as n-butanol, n-pentanol, n-hexanol, and preferably 1-ethinyl-1-cyclohexanol.

Suitable injection molding machines for the injection molding of liquid silicones are known to the person skilled in the art, and can for example be derived from DE 40 14 244 A1, DE 101 45 160 A1 or DE 103 027 A1. The vulcanization temperature usually is in the range from 130 to 230 °C, in particular in the range from 140 to 220°C, and most preferred from 145 to 170°C.

Suitable elastomeric materials also comprise thermoplastic elastomers.

These thermoplastic elastomers usually represent graft polymers and copolymers having thermoplastic sequences and elastomeric sequences which are essentially incompatible with each other. The soft elastomeric sequences usually have a glass transition temperature which is below ambient temperature whereas the harder thermoplastic sequences regularly have a glass transition temperature which is above ambient temperature. Thermoplastic elastomers comprise for example amide elastomers, copolyester elastomers, polyolefin elastomers, polystyrene elastomers, and polyurethane elastomers. Thermoplastic polyamide elastomers usually are made of block copolymers having hard polyamide sequences and soft polyether and/or polyester sequences. Thermoplastic copolyester elastomers are usually based on polyalkylene ether diol sequences (and/or long chained aliphatic dicarbonic esters) and sequences of partially crystalline polybutulene terephthalate. Suitable polyolefin elastomers are generally based on mixtures of isotactic polypropylene and ethylene-propylene rubbers. Thermoplastic polystyrene elastomers (TPS) are usually prepared via anionic polymerization and comprise sequences made from styrene on the one hand and butadiene on the other hand (SB, SBS). Thermoplastic polyurethane elastomers are usually made via a polyaddition reaction of long chained diols, such as 1,4-butane diol, 1,6 hexane diol, polyether diols, polyester diols or polycarbonate diols, with aliphatic diisocyanates such as HDI or IPDI. The aforementioned elastomeric materials as well as their preparation are known to a person skilled in the art.

The materials used for the first and second zones, in particular for the first zone, are rather soft and non-slip. The Shore A hardness of the pad, and in particular of the first zone, preferably is in the range from 2 to 15, in particular from 3 to 10, and most preferred from 5 to 9 (according to WSTM 1110).

In a further embodiment the pad as described above can also comprise a pattern of holes, in particular in the first zone. These holes, for example 2, 3, 4, 5, 6 or more, can be arranged in a regular or irregular pattern across the first zone or the entire pad. In one embodiment holes are arranged in, in particular parallel, rows. These rows are preferably oriented in the toe to heel direction. Advantageously, these holes have a diameter in the range of 0.5 to 3 mm. These holes serve to properly allow guiding sweat from the sole of a foot to an insole of shoe. In a most preferred embodiment at least two holes are located in the region of a wave trough of a ridge.

The relative arrangement of the first and the second zone can be varied to a great extent apart from the requirement that the first zone of the pad for the ball regions is located in the heel to toe direction in the X dimension in front of the second zone. These pads can be shaped symmetrically or asymmetrically. In one embodiment the second zone is asymmetrically tapered on the Y axis in the toe to heel direction.

The object underlying the present invention is also solved by an insole which comprises a pad for the ball regions of a foot which is according to the invention. These insoles are advantageously made in one piece, for example, by use of the 2K injection molding technology. For example, whereas the pad is made of an elastomeric material the remainder of the insole into which the pad(s) is (are) embedded is made of a thermoplastic material or a foamed material.

According to another aspect of the present invention shoes are provided which comprise the pad adapted for supporting the ball region of a foot which is according to the invention. Shoes which to a great extent take advantage of the pads or insoles of the present invention are, for example, high heeled shoes and climbing shoes, in particular climbing shoes used by free climbers.

The dimensions of the pads according to the invention can be varied to great extent. With regard to the pad for the ball regions it has been found advantageous to make use of a width from 30 to 80 mm, in particular from 63 to 73 mm (measured from the outside to the inside in the Y dimension), and a length in the range from 40 to 95, in particular from 60 to 90 mm (in the heel to toe direction in the X dimension).

The maximum thickness of the first zone preferably is in the range from 1 to 10 mm, in particular 1,5 to 8 mm, and more preferably from 1,75 to 5 mm. The hight of the protruding elements, in particular the ridges, from their base to the peak preferably is above 0.75 mm, e.g. in the range from 0.75 to 4 mm, in particular above 1 mm, e.g. from 1 to 3.5 mm, and most preferred above 1.25, e.g. from 1.25 to 2 mm. It can also be above 1.5 or 2.0 mm.

The pads according to the present invention exhibit the very poor abrasion resistance (according to EN 13516) both in dry and wet conditions. For example, if a circular test specimen taken from the pad is abradant with a cyclic planar motion in a form of a Lissajous figure no holes are observed even at about 25.000 cycles in dry condition and at about 12.500 cycles under wet conditions. Furthermore, the pads of the present invention have a very good tear strength (according to EN 13571). Another essential benefit of the pads according to the invention results from their pronounced washing resistance (according to ISO 105 C06 and EN ISO 25077). Even after 5 washing cycles at 90°C in a conventional washing machine no color change, no staining and also no dimensional changes are observed with the pads of the invention. In addition, essentially no mechanical aging is observed with the pads of the present invention when, for example, pressed 50.000 times up to a load of 60 kg with a frequency equal to a 1 Hz. In terms of hygienic comfort it has been found advantageous that the pads according to the invention only exhibit a rather low fluid, i.e. water absorption and a 100% water desorption. These results can be achieved with test specimens placed in a so called permeometer Bally. Per minute 10 cm³ of water arrive on the test specimen which is repeatedly flexed and pressed (80N) in order to reproduce the different strength of wear. This procedure is stopped when the test specimen is saturated. The maximum quantity of water absorbed per unit of surface preferably is not about 0.8 mg/cm³, more preferably not about 0.5 mg/cm³. In order to determine the desorption capacity the aforementioned test specimen is kept in a conditioning area (23°C and 50% RH) during 16 hours and its difference of weight will give the desorption and can been expressed in %. The aging of the pad according to the invention can also be determined by measuring the energy return (according to CTC P04) where the pad is compressed with a cylinder of 50 mm diameter until 400 N followed by a relaxation. This test can be carried out on a dynamometer with a speed of 20 mm/min. The results obtained will represent the ratio of visco-elastic energy to the total energy expressed in %. With the pads according to the present invention this value is regularly greater than 60%, but in particular greater than 80%. Moreover, the pads according to the present invention have a satisfactory coefficient of friction (according to CTC P17). Here the test specimen are put on a steel plate and are treated with a mass of 5 kg. By pulling the specimen with a speed rate of 100 mm/min with a dynamometer the friction force can be determined under both dry and wet conditions. With a pad according to the present invention coefficient of friction values of above 5, in particular above 6 under dry conditions, and of about 5 daN under wet conditions are reliably obtained.

With the present invention it has been surprisingly found that the comfort and protection rendered by the pad for the ball regions can be significantly enhanced by having two distinct zones one of which is tapered and/or having two distinct zones at least one of which exhibits protruding elements such as ridges in particular in wave-like manner which are adapted for the massaging of the foot of the wearer of a shoe, and wherein both are comprised of an elastomeric material. Furthermore, with the pads of the present invention, also when incorporated into an insole, a sufficient cushioning effect can be obtained by still being discreet to wear. Moreover, the pads of the present invention stay in place in a shoe in a reliable manner and can be re-used for long periods even after several machine washing cycles. In particular with high heeled shoes the wearer no longer is experiencing stresses or a tensioning or hardening of the muscles. In contrast, it even has been found rather relaxing to wear high heeled shoes when pads according to the present invention have been placed therein. With the pads for the ball regions the wearer no longer experiences the risk to slip through in a very discrete manner.

Further characteristics and advantages of the invention will be more apparent from the detailed description of a preferred, non-exclusive embodiment of a pad according to the invention, which is described as a non-limiting example with the annexed drawings, in which
- Figure 1: is a perspective view of a pad according to the invention adapted to be used for the front part of a right foot;
- Figure 2: is a schematic top view of the pad according to Figure 1;
- Figure 3: is a cross-sectional view of the pad according to Figure 2 along axis A-A;
- Figure 4: is a cross-sectional view of the pad according to Figure 2 along axis B-B;
- Figure 5: is a schematic top view of another embodiment of a pad according to the invention adapted to be used for the front part of a right foot;
- Figure 6: is a sectional view of the first zone of a pad according to the invention; and
- Figure 7: is the view of another section of a pad according to the invention.

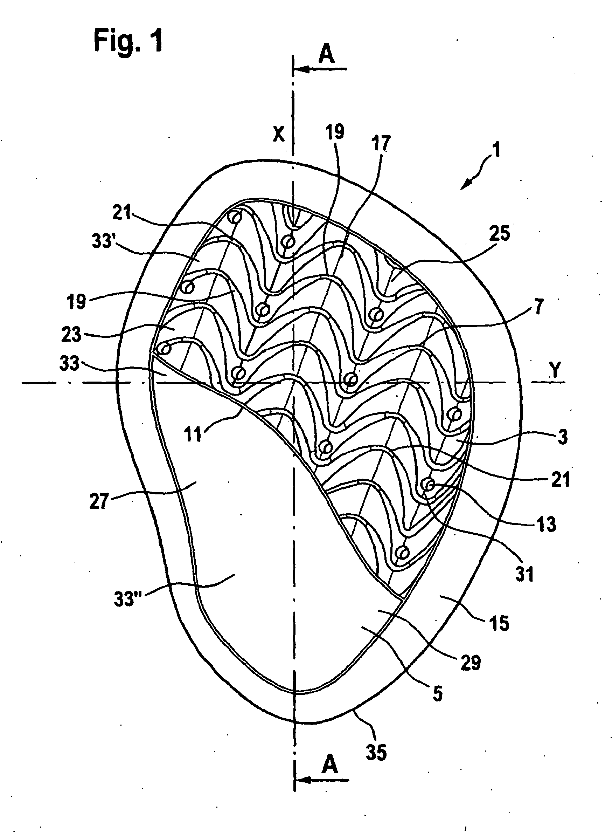

Particularly referring to the above figures, a pad according to the invention which is designed for various footwear types, will be described. The pad 1 depicted in figure 1 is adapted to be used with the right shoe of a pair of shoes. A mirror image of pad 1 can be used in a preferred embodiment for the left shoe of a pair of shoes. Pad 1, which is a preferred embodiment of a pad according to the invention, is entirely made by injection molding of liquid silicon rubber. Pad 1 is translucent and has a Shore A hardness in the range from 5 to 10, e.g. of about 7 (according to WSTM 1110), a tensile strength in the range of from 1 to 5 MPa, in particular of from 1.5 to 4 MPa, for example of 1.92 MPa (WSTM1160) and an elongation at break in the range from 400% to 1000%, e.g. about of about 460% or 800% (according to WSTM 1160). Pad 1 is provided with a first zone 3 located towards the toe direction in the X dimension and a second zone 5 located towards the heel direction in the X dimension, and has a circumferential rim 15. The rim is also made of liquid silicon rubber. Pad 1 of Figure 1 is made in one piece and from one material. Figure 1 depicts the front side surface 33 of a pad 1 which is in contact with the foot of a wearer. The first zone 3 of the front side 33' of pad 1 exhibits a pattern of essentially uniformly distributed wave-like ridges 7. The ridges 7 have an extended region 17 with a rather low slope (first sidewall) which is directed towards the toes in the X dimension, and a region 19 having a rather large slope (second sidewall) and which therefore is much smaller, i.e. covering a smaller surface of the front side 33 than region 17. The large slope region 19 of a first ridge 7 and the low slope region 17 of an adjacent ridge 7 meet at a bent valley-like borderline 21 between two ridges which is as the ridges bent in a wave-like manner.

The first zone 3 has an inside portion 23 being substantially located on the left-hand side of the axis A-A (or the X axis), and an outside portion 25 being substantially located on the right-hand side of the axis A-A, which due to their different shapes yield an asymmetric first zone. Axis A-A is parallel to the X dimension. In the preferred embodiment of a pad 1 as depicted in Figure 1 the outside portion 25 of the first zone 3 is extending more pronounced in the toe to heel direction than the inside portion 23 of pad 1. The second zone 5 is designed in a corresponding manner, that is the inside portion 27 of the second zone 5 is extending to greater extent in the heel to toe direction than the outside portion 29 of the second zone 5. This configuration is best suited to provide an appropriate support for the ball region of the front of the foot. Accordingly, the dividing line 11 between the first and the second zone is bent. The front side surface 33" of the second zone 5 does not exhibit any protruding elements and is therefore flat. The embodiment of pad 1 as depicted in Figure 1 is provided with a multitude of holes 13 in the first zone 3. These holes 13 are preferably located in the wave trough regions 31 of the ridges 7 and have a diameter of about 2 mm. The backside surface 35 of pad 1 is flat and can easily accommodate to the sole of any shoe.

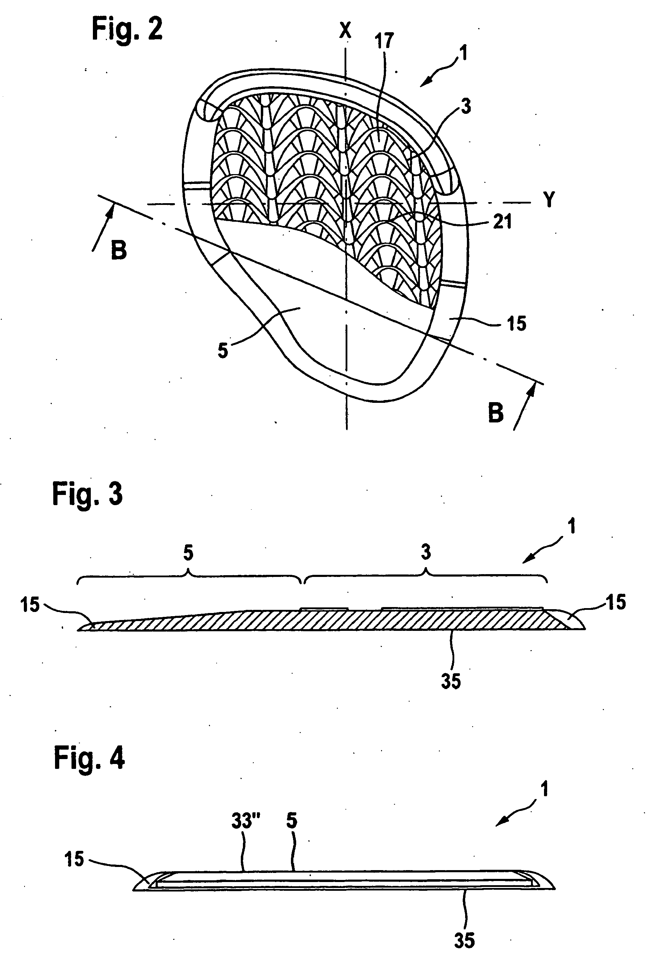

In Figure 2 a schematic top view of the pad 1 according to Figure 1 can be seen. The maximum width of pad 1 in the Y dimension is in the range from 61 to 70 mm. The maximum length of pad 1 in X direction is in the range from 83 to 85 mm. Figure 2 confirms that the borderline 21 between adjacent ridges is rather small due to the rather extended low slope regions 17.

Figure 3 depicts across-sectional view of pad 1 along axis A-A of Figure 1. Evidently, the first zone 3 has a rather uniform thickness. The thickness of pad 1, however, continuously decreases in the second zone 5 when viewed in the X dimension from toe to heel direction. The cross-sectional view according to Figure 3 also shows that the rim 15 is also tapered towards its edge, however, making use of a rounded design.

Figure 4 which is a cross-sectional view along axis B-B of Figure 2 shows, as does Figure 3, that the back side surface 35 of pad 1 is flat, and also that the front side surface 33" of the second zone 5 has a flat configuration.

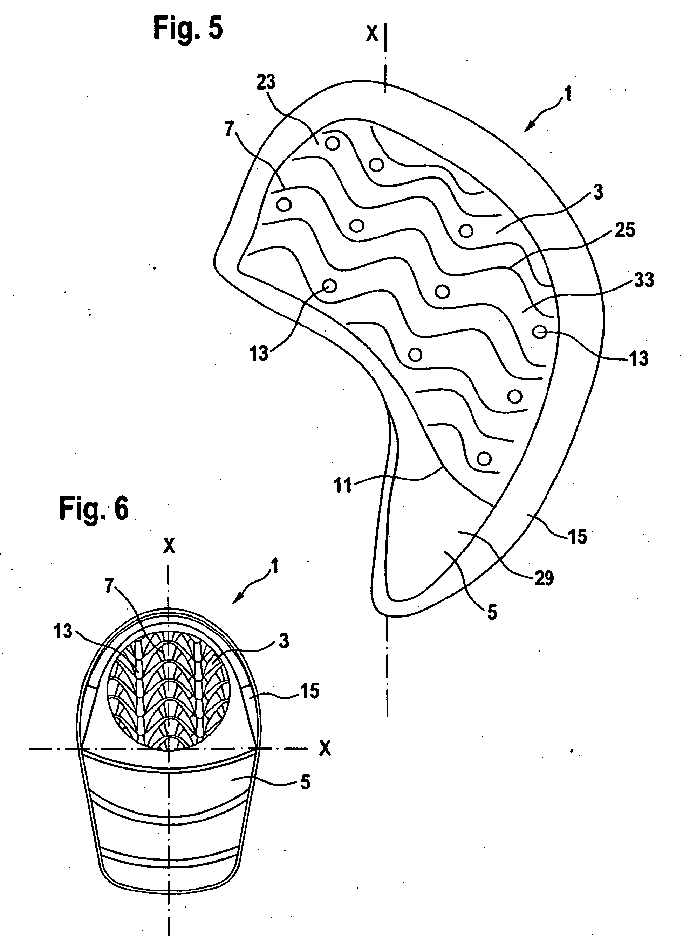

In Figure 5 a schematic top view of another embodiment of pad 1 according to the invention which is adapted for the support of the ball regions of the right foot is depicted. The only difference with respect to the embodiment as shown in Figure 1 is that the second zone 5 no longer extends over the entire width of the first zone 3 (in the Y dimensions). In the present case the second zone 5 essentially only extends along that portion which has been designated the outside portion 29 of the pad of Figure 1. Thus, the rim 15 is bordering a part of the rear section of the first zone 3 of the pad of Figure 5 when viewed in the toe to heel direction along the X dimension. As with the pad of Figure 1 also in the embodiment shown in Figure 5 the outside portion 25 of the first zone 3 is extending into the toe to heel direction along the X dimension to a greater extent than the inside portion 23 of the first zone 3 of the pad 1. The second zone 5 still allows a very discrete wearing sensation, and also assists in placing the pad 1 inside a shoe and also removing said pad from the shoe.

Figure 6 depicts a section of the first zone 3 of pad 1 showing ridges 7 as well as holes 13. The holes 13 are located in the region of the wave troughs 31. Figure 6 clearly shows ridges 7 in the form of waves having on the one side of its peak a first sidewall 17 with a rather slow slope and an adjacent second sidewall 19 with a rather large slope. While the first sidewall 17 covers a rather large surface, the second sidewall 19 is rather small in dimension. The first sidewall 17 of a first ridge 7 has a common boundary with the second sidewall 19 of an adjacent ridge 7. The holes 13 serve for conducting sweat from the foot of the wearer to the insole of a shoe. The first sidewalls 17 are facing into the heel to toe direction whereas the second sidewalls are facing into the toe to heel direction in a preferred embodiment.

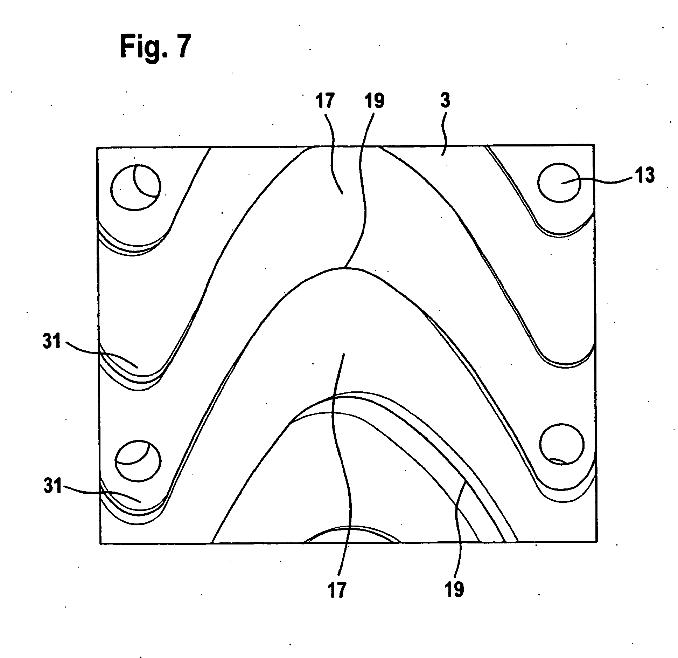

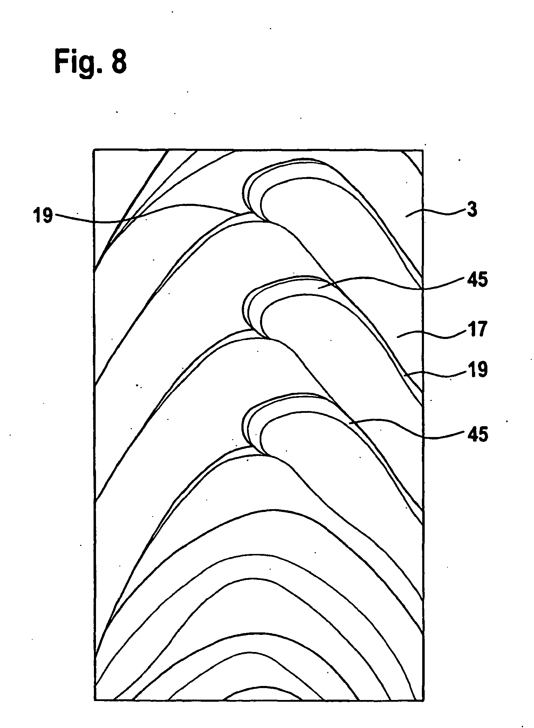

Figure 7 shows an embodiment of a section of the first zone 3 of a pad 1 without any holes 31 therein. All other details are essentially identical to the embodiment shown in Figure 7, apart from transition elements 45 between the sidewalls of adjacent ridges, which allow for an even more discrete wear.

### Reference list

- 1: Pad
- 3: First zone
- 5: Second zone
- 7: Ridges
- 9: Valley
- 11: Dividing line
- 13: Holes
- 15: Rim
- 17: Low slope region
- 19: Large slope region
- 21: Borderline
- 23: Outside portion of the first zone
- 25: Inside portion of the first zone
- 27: Inside portion of the second zone
- 29: Outside portion of the second zone
- 31: Wave trough regions
- 33: front side surface of the pad
- 33': front side surface of the first zone
- 35: back side surface of the pad
- 35': back side surface of the first zone
- 35": back side surface of the second zone
- 37: edge of the rim
- 45: transition element between adjacent ridges

## Claims

1. Pad (1) for the ball regions of a human foot adapted to be placed in a shoe beneath a foot of a wearer of the shoe having a dimension in the heel to toe direction (X axis), a dimension in the outside to inside direction (Y axis) and a dimension in the down to up direction (Z axis) and comprising a front side surface (33) and a back side surface (35), wherein the pad (1) comprises at least two different zones, at least one first zone (3) located on the X axis towards the toe direction and at least one adjacent second zone (5) located on the X axis towards the heel direction, and wherein the first and second zones (3, 5) are comprising an elastomeric material, wherein said at least one first zone (3) is adapted for the support of the ball regions relating to at least three adjacent toes, wherein the first zone (3) has an average thickness greater than that of the second zone (5), wherein the second zone (5) is tapered in the Z dimension in a toe to heel direction, and **characterized in that** that the front side surface (33) of the first zone (3) exhibits a pattern of protruding elements (7) adapted for the massaging of the foot of the wearer.

2. Pad (1) according to claim 1, wherein the pattern of protruding elements comprises a multitude of adjacent ridges (7).

3. Pad (1) according to claim 2 wherein at least two adjacent ridges (7) have a wave-like form in the X-Y plane, in particular oriented from inside to outside along the Y axis,

4. Pad (1) according to claim 2 or 3 wherein essentially all ridges (7) are oriented uniformly, in particular essentially in parallel.

5. Pad (1) according to one of claims 2 to 4 wherein at least one wave-like ridge (7), in particular two adjacent wave-like ridges (7), exhibit three adjacent wave troughs (31).

6. Pad (1) according to one of the preceding claims wherein said pad essentially consists of the first (3) and the second zone (5).

7. Pad (1) according to one of the preceding claims wherein the back side surface (35') of the first zone (3) and/or the back side surface of the second zone (35") are essentially flat.

8. Pad (1) according to one of the preceding claims wherein the front side surface (33") of the second zone (5) is essentially flat.

9. Pad (1) according to one of the preceding claims wherein the first and second zone (3, 5), in particular the pad (1), are made in one piece.

10. Pad (1) according to one of the preceding claims wherein the back side surface (35') of the first zone (3) is provided with a pattern of protruding elements (7).

11. Pad (1) according to one of the preceding claims wherein the first zone (3) exhibits a uniform average thickness.

12. Pad (1) according to one of the preceding claims further comprising a, in particular circumferential, rim portion (15).

13. Pad (1) according to claim 12 wherein the rim (15) comprises a thermoplastic or elastomeric material.

14. Pad (1) according to claim 12 or 13 wherein the rim (15) is tapered towards its circumferential edge (37).

15. Pad (1) according to one of the preceding claims wherein the elastomeric material is a natural or synthetic rubber or a thermoplastic elastomer (TPE).

16. Pad (1) according to one of the preceding claims further comprising a pattern of holes (13), in particular in the first zone (3).

17. Pad (1) according to claim 16 wherein the holes (13) have a diameter in the range of from 0.5 to 3.0 mm.

18. Pad (1) according to claim 16 or 17 wherein at least two holes (13) are located in the region of a wave trough (31) of a ridge (7).

19. Pad (1) according to one of the preceding claims wherein the second zone (5) is asymmetrically tapered on the Y axis in the toe to heel direction.

20. Pad (1) according to one of the preceding claims wherein the outside portion (23) of the first zone (3) is extending more to the heel direction in the X dimension than the inside portion (25) of the first zone (3) and/or wherein the inside portion (27) of the second zone (5) is extending more to the toe direction in the X dimension than the outside portion (29) of the second zone (5).

21. Pad (1) according to one of the preceding claims wherein at least one ridge (7) having a first sidewall which is directing towards the toe of the foot of a wearer and a second sidewall adjacent the peak of the ridge (7) which is directing towards the heel of the foot of a wearer wherein the average slope of the first sidewall is smaller than the average slope of the second sidewall of the ridge.

22. Pad (1) according to one of the preceding claims wherein said first zone (3) is adapted for the support of the ball regions relating to all five toes of a human foot.

23. Insole comprising a pad according to any of the preceding claims.

24. Insole according to claim 23 wherein said insole is made one piece.

25. Shoe comprising a pad according to any of claims 1 to 22.

26. Shoe according to claim 25 wherein said shoe is a high heeled shoe or a climbing shoe.

27. Use of a pad according to any of claims 1 to 22 for the placement in a shoe.

## Patentansprüche

1. Pad (1) für die Ballenbereiche eines menschlichen Fußes, das für die Platzierung in einem Schuh unter einem Fuß eines Trägers des Schuhs geeignet ist, eine Abmessung in der Ferse-Zehen-Richtung (X-Achse), eine Abmessung in der Außen-Innen-Richtung (Y-Achse) und eine Abmessung in der Unten-Oben-Richtung (Z-Achse) aufweist und eine Vorderseitenoberfläche (33) und eine Rückseitenoberfläche (35) umfasst, wobei das Kissen (1) mindestens zwei verschiedene Zonen umfasst, mindestens eine erste Zone (3), die sich auf der X-Achse hin zur Zehenrichtung befindet, und mindestens eine benachbarte zweite Zone (5), die sich auf der X-Achse hin zur Fersenrichtung befindet, und wobei die erste und zweite Zone (3, 5) ein Elastomer-Material umfassen, wobei die mindestens eine erste Zone (3) für die Auflage der mindestens drei benachbarten Zehen zugeordneten Ballenbereiche geeignet ist, die erste Zone (3) eine durchschnittliche Dicke aufweist, die größer ist als diejenige der zweiten Zone (5), die zweite Zone (5) sich in der Z-Abmessung in einer Zehen-Ferse-Richtung verjüngt und **dadurch gekennzeichnet, dass** die Vorderseitenoberfläche (33) der ersten Zone (3) ein Muster vorstehender Elemente (7) aufweist, das geeignet ist, den Fuß des Trägers zu massieren.

2. Pad (1) nach Anspruch 1, **dadurch gekennzeichnet, dass** das Muster vorstehender Elemente eine Vielzahl benachbarter Erhöhungen (7) umfasst.

3. Pad (1) nach Anspruch 2, **dadurch gekennzeichnet, dass** mindestens zwei benachbarte Erhöhungen (7) eine wellenartige Form in der X-Y-Ebene aufweisen, die insbesondere von innen nach außen entlang der Y-Achse ausgerichtet ist.

4. Pad (1) nach Anspruch 2 oder 3, **dadurch gekennzeichnet, dass** im Wesentlichen alle Erhöhungen (7) einheitlich ausgerichtet sind, insbesondere im Wesentlichen parallel.

5. Pad (1) nach einem der Ansprüche 2 bis 4, **dadurch gekennzeichnet, dass** mindestens eine wellenartige Erhöhung (7), insbesondere zwei benachbarte wellenartige Erhöhungen (7), drei benachbarte Wellentäler (31) aufweisen.

6. Pad (1) nach einem der vorangehenden Ansprüche, **dadurch gekennzeichnet, dass** das Pad im Wesentlichen aus der ersten (3) und der zweiten Zone (5) besteht.

7. Pad (1) nach einem der vorangehenden Ansprüche, **dadurch gekennzeichnet, dass** die Rückseitenoberfläche (35') der ersten Zone (3) und/oder die Rückseitenoberfläche der zweiten Zone (35") im Wesentlichen flach sind.

8. Pad (1) nach einem der vorangehenden Ansprüche, **dadurch gekennzeichnet, dass** die Vorderseitenoberfläche (33") der zweiten Zone (5) im Wesentlichen flach ist.

9. Pad (1) nach einem der vorangehenden Ansprüche, **dadurch gekennzeichnet, dass** die erste und zweite Zone (3, 5), insbesondere das Pad (1), in einem Stück gefertigt sind.

10. Pad (1) nach einem der vorangehenden Ansprüche, **dadurch gekennzeichnet, dass** die Rückseitenoberfläche (35') der ersten Zone (3) mit einem Muster vorstehender Elemente (7) versehen ist.

11. Pad (1) nach einem der vorangehenden Ansprüche, **dadurch gekennzeichnet, dass** die erste Zone (3) eine einheitliche durchschnittliche Dicke aufweist.

12. Pad (1) nach einem der vorangehenden Ansprüche, welches ferner einen, insbesondere umfänglichen, Randabschnitt (15) aufweist.

13. Pad (1) nach Anspruch 12, **dadurch gekennzeichnet, dass** der Rand (15) ein Thermoplast- oder Elastomer-Material umfasst.

14. Pad (1) nach Anspruch 12 oder 13, **dadurch gekennzeichnet, dass** der Rand (15) sich zu seiner Umfangskante (37) hin verjüngt.

15. Pad (1) nach einem der vorangehenden Ansprüche, **dadurch gekennzeichnet, dass** das Elastomer-Material ein natürlicher oder synthetischer Kautschuk oder ein thermoplastisches Elastomer (TPE) ist.

16. Pad (1) nach einem der vorangehenden Ansprüche, welches ferner ein Muster von Öffnungen (13), insbesondere in der ersten Zone (3), umfasst.

17. Pad (1) nach Anspruch 16, **dadurch gekennzeichnet, dass** die Öffnungen (13) einen Durchmesser im Bereich von 0,5 bis 3,0 mm aufweisen.

18. Pad (1) nach Anspruch 16 oder 17, **dadurch gekennzeichnet, dass** mindestens zwei Öffnungen (13) sich im Bereich eines Wellentals (31) einer Erhöhung (7) befinden.

19. Pad (1) nach einem der vorangehenden Ansprüche, **dadurch gekennzeichnet, dass** die zweite Zone (5) sich auf der Y-Achse in der Zehen-Ferse-Richtung asymmetrisch verjüngt.

20. Pad (1) nach einem der vorangehenden Ansprüche, **dadurch gekennzeichnet, dass** der Außenabschnitt (23) der ersten Zone (3) sich in der X-Abmessung mehr zur Fersenrichtung erstreckt als der Innenabschnitt (25) der ersten Zone (3) und/oder dass der Innenabschnitt (27) der zweiten Zone (5) sich in der X-Abmessung mehr zur Zehenrichtung erstreckt als der Außenabschnitt (29) der zweiten Zone (5).

21. Pad (1) nach einem der vorangehenden Ansprüche, **gekennzeichnet durch** mindestens eine Erhöhung (7), der eine zur Zehe des Fußes eines Trägers gerichtete erste Seitenwand und eine der Spitze der Erhöhung (7) benachbarte, zur Ferse des Fußes eines Trägers gerichtete zweite Seitenwand aufweist, wobei die durchschnittliche Neigung der ersten Seitenwand kleiner ist als die durchschnittliche Neigung der zweiten Seitenwand des Grates.

22. Pad (1) nach einem der vorangehenden Ansprüche, **dadurch gekennzeichnet, dass** die erste Zone (3) für die Auflage der allen fünf Zehen eines menschlichen Fußes zugeordneten Ballenbereiche geeignet ist.

23. (Einlege)-Sohle, welche ein Pad nach einem der vorangehenden Ansprüche umfasst.

24. (Einlege)-Sohle nach Anspruch 23, **dadurch gekennzeichnet, dass** die (Einlege)-Sohle aus einem Stück gefertigt ist.

25. Schuh, der ein Pad nach einem der Ansprüche 1 bis 22 umfasst.

26. Schuh nach Anspruch 25, **dadurch gekennzeichnet, dass** der Schuh ein hochhackiger Schuh oder ein Kletterschuh ist.

27. Verwendung eines Pads nach einem der Ansprüche 1 bis 22 für die Platzierung in einem Schuh.

## Revendications

1. Coussinet pour les zones de l'avant-pied d'un homme, conçu pour être placé dans une chaussure en dessous du pied de la personne portant la chaussure ayant une dimension dans la direction talon-orteil (axe X), une dimension dans la direction extérieur-intérieur (axe Y) et une dimension dans la direction bas-haut (axe Z), et comprenant une surface latérale avant (33) et une surface latérale arrière (35), dans lequel le coussinet (1) comprend au moins deux zones différentes, au moins une première zone (3) située sur l'axe X dans le sens des orteils et au moins une seconde zone adjacente (5) située sur l'axe X dans le sens du talon, et dans lequel les première et seconde zones (3, 5) comprennent une matériau élastomère, ladite au moins une première zone (3) étant conçue pour supporter les zones de l'avant-pied par rapport à au moins trois orteils adjacentes, **caractérisé en ce que** la première zone (5) a une épaisseur moyenne supérieure à celle de la seconde zone (5), **en ce que** la seconde zone (5) est conique dans la dimension Z dans la direction orteil-talon, et **caractérisé en ce que** la surface latérale avant (33) de la première zone (3) présente un motif d'éléments saillants (7) conçu pour le massage du pied de la personne portant la chaussure.

2. Coussinet (1) selon la revendication 1, dans lequel le motif d'éléments saillants comprend une multitude d'arêtes adjacentes (7).

3. Coussinet (1) selon la revendication 2, dans lequel au moins deux arêtes adjacentes (7) ont une forme analogue à une vague dans le plan X-Y, en particulier avec une orientation de l'intérieur vers l'extérieur le long de l'axe Y.

4. Coussinet selon la revendication 2 ou 3, dans lequel sensiblement toutes les arêtes (7) sont orientées uniformément, en particulier sensiblement en parallèle.

5. Coussinet selon les revendications 2 à 4, dans lequel au moins une arête analogue à une vague (7), en particulier deux arêtes adjacentes analogues à une vague (7), présente trois creux de vague adjacents (31).

6. Coussinet selon l'une des revendications précédentes, dans lequel ledit coussinet est constitué essentiellement de la première (3) et de la seconde zone (5).

7. Coussinet (1) selon l'une des revendications précédentes, dans lequel la surface latérale arrière (35') de la première zone (3) et/ou la surface latérale arrière de la seconde zone (35") sont essentiellement plates.

8. Coussinet (1) selon l'une des revendications précédentes, dans lequel la surface latérale avant (33") de la seconde zone (5) est sensiblement plate.

9. Coussinet selon l'une des revendications précédentes, dans lequel la première et la seconde zones (3, 5), en particulier le coussinet (1), sont en un seul bloc.

10. Coussinet (1) selon l'une des revendications précédentes, dans lequel la surface latérale arrière (35') de la première zone (3) est munie d'un motif d'éléments saillants (7).

11. Coussinet (1) selon l'une des revendications précédentes, dans lequel la première zone (3) présente une épaisseur moyenne uniforme.

12. Coussinet (1) selon l'une des revendications précédentes, comprenant en outre une partie de rebord (15), en particulier circonférentielle.

13. Coussinet (1) selon la revendication 12, dans lequel le rebord (15) comprend un matériau thermoplastique ou élastomère.

14. Coussinet (1) selon la revendication 12 ou 13, dans lequel le rebord (15) est conique vers son bord circonférentiel (37).

15. Coussinet (1) selon l'une des revendications précédentes, dans lequel le matériau élastomère est un caoutchouc naturel ou synthétique, ou un matériau élastomère (TPE).

16. Coussinet (1) selon l'une des revendications précédentes, comprenant en outre un motif de trous (13), en particulier dans la première zone (3).

17. Coussinet (1) selon la revendication 16, dans lequel les trous (13) ont un diamètre compris dans la plage de 0,5 à 3,0 mm.

18. Coussinet (1) selon la revendication 16 ou 17, dans lequel au moins deux trous (13) sont situés dans la zone d'un creux de vague d'une arête (7).

19. Coussinet (1) selon l'une des revendications précédentes, dans lequel la seconde zone (5) est conique de manière symétrique sur l'axe Y dans la direction orteil-talon.

20. Coussinet (1) selon l'une des revendications précédentes, dans lequel la partie extérieure (23) de la première zone (3) s'étend plus dans la direction du talon dans la dimension X que la partie intérieure (25) de la première zone (3), et/ou dans lequel la partie intérieure (27) de la seconde zone (5) s'étend plus dans la direction des orteils dans la dimension X que la partie extérieure (29) de la seconde zone (5).

21. Coussinet (1) selon l'une des revendications précédentes, dans lequel au moins une arête (7) ayant une première paroi latérale qui est dirigée vers l'orteil du pied de la personne portant la chaussure, et une seconde paroi latérale adjacente au sommet de l'arête (7) qui est dirigée vers le talon du pied de la personne portant la chaussure, dans lequel la pente moyenne de la première paroi latérale est plus petite que la pente moyenne de la première paroi latérale est plus petite que la pente moyenne de la seconde paroi latérale de l'arête.

22. Coussinet (1) selon l'une des revendications précédentes, dans lequel la première zone (3) est conçue pour le support des zones de l'avant-pied par rapport aux cinq orteils du pied d'un homme.

23. Semelle, comprenant un coussinet selon l'une quelconque des revendications précédentes.

24. Semelle selon la revendication 23, dans lequel ladite semelle est en un seul bloc.

25. Chaussure, comprenant un coussinet selon l'une quelconque des revendications 1 à 22.

26. Chaussure selon la revendication 25, dans laquelle ladite chaussure est une chaussure à talon haut ou une chaussure d'escalade.

27. Utilisation d'un coussinet selon l'une quelconque des revendications 1 à 22, pour une mise en place dans une chaussure.
